# EUROPEAN PATENT APPLICATION

(11) **EP 1 612 227 A1**
(43) Date of publication of application: **04.01.2006**
(21) Application number: 04252658.2
(22) Date of filing: 07.05.2004
(51) Int. Cl.: C08F 8/00

(54) **Shear degradation inhibitor for triblock thermoplastic elastomers**

(71) Applicant: Bridgestone Corporation, Tokyo 104-0031 (JP)
(72) Inventor: Hall, James E, Mogadore 44260, Ohio (US)
(74) Representative: Whalley, Kevin

(57) **Abstract**

Thermoplastic elastomers, such as styrene-poly(ethylenepropylene)-styrene (SEPS) and styrene-poly(ethylene-butylene)-styrene (SEBS), have a tendency to undergo homolytic cleavage on mixing, particularly when extended mixing times are employed. Such thermoplastic elastomers are protected by addition of a polymer with multiple reactive sites, such as polybutadiene. The polymer reacts with two or more of the cleaved fragments forming a copolymer which regains much of the original character of the thermoplastic elastomer.

## Description

### BACKGROUND OF THE INVENTION

### FIELD OF THE INVENTION

The invention relates to a method of inhibiting degradation of triblock copolymers during mixing. In addition, it relates to a polymer having reactive sites which repair homolytic cleavage of A-B-A copolymers, and will be described with particular reference thereto.

### DISCUSSION OF THE ART

Elastomeric compositions composed of styrene-poly(ethylene-propylene)-styrene (SEPS) or styrene-poly(ethylene-butylene)-styrene (SEBS) thermoplastic elastomeric block copolymers find widespread use in molding and extruding applications. Typically, the block copolymer is mixed with an extender oil and other compounding agents to give the desired properties of the finished product. When heated above the softening point, the block copolymer is soft and pliable. When cooled, the styrene end groups congregate into domains, such that the copolymer exhibits strength characteristics akin to those of a crosslinked polymer. However, an advantage over crosslinked polymer formulations is that scrap from the molding process can be reused, simply by reheating the thermoplastic elastomeric block copolymer above its softening point.

Triblock copolymers of this type tend to suffer homolytic cleavage when energy is applied. For example, when subjected to mixing for extended periods, such as in a compounding process, the energy imparted to the triblock shears the triblock into two, usually in the elastomeric portion of the triblock. The diblock radicals formed may recombine to form a triblock, but in many instances are trapped by antioxidants used in the formulation and are thus diblock in character. As the diblock content of the formulation increases, the elastomeric properties provided by the triblock are diminished.

One way to reduce this problem is to reduce the mixing time used in the compounding step. However, this can result in poor mixing of some of the components. This is particularly true in the case of polyphenylene ethers, also known as polyphenylene oxides, which although miscible with polystyrene portions of the triblock, take a fairly long time to disperse. Polyphenylene ether resins are an extremely useful class of high performance engineering thermoplastics by reason of their hydrolytic stability, high dimensional stability, toughness, heat resistance and dielectric properties. They also exhibit high glass transition temperature values, typically in the range of 150°C to 210°C, and good mechanical performance.

Another method of avoiding cleavage involves dissolving the compounding components in a solvent, such as toluene. Once the components are dispersed, the compounding components are precipitated out of the toluene.

The present invention provides an advantageous method of inhibiting shear degradation of triblock polymers.

### SUMMARY OF THE INVENTION

In accordance with one aspect of the present invention, a method of reducing degradation of a triblock polymer into diblock polymers is provided. The method includes combining the triblock polymer with a polymer which provides a first reactive site and at least a second reactive site. The triblock is subjected to a process which tends to produce the degradation. A first of the diblock polymers bonds to the first reactive site and a second of the diblock polymers bonds to the second reactive site, such that the polymer acts as a bridge between the first and second diblock polymers.

In accordance with another aspect of the present invention, a method of reducing homolytic cleavage of a first copolymer having a first thermoplastic endblock, a second thermoplastic endblock, and an elastomeric midblock intermediate the first and second endblocks is provided. The method includes subjecting the first copolymer to a process which causes the homolytic cleavage of the first copolymer into smaller copolymers having an thermoplastic endblock and an elastomeric endblock. At least a first and a second of the smaller copolymers are reacted with a polymer having at least first and second reactive sites capable of reacting with the smaller copolymers to form a copolymer having a first thermoplastic endblock, a second thermoplastic endblock, and an elastomeric midblock intermediate the first and second endblocks.

In accordance with another aspect of the present invention, a method of compounding a copolymer which tends to undergo cleavage into smaller polymers is provided. The method includes mixing the copolymer with a polyphenylene ether to form a mixture. The step of mixing results in at least a portion of the copolymer being cleaved into at least two smaller polymers. At least two of the smaller polymers are reacted with a polymer having at least first and second reactive sites, whereby the compression set of a solid formed from the mixture is lower than in the absence of the polymer having the first and second reactive sites.

In accordance with another aspect of the present invention, a triblock polymer is provided. The triblock polymer includes a first thermoplastic polymer endblock, a second thermoplastic polymer endblock, and an elastomeric polymer midblock intermediate the first and second endblocks, the midblock. The midblock includes a first elastomeric polymer portion and a second elastomeric portion. The first and second portions are hydrogenated and derived from the same monomer. The midblock further includes an unhydrogenated polymer portion, intermediate the first and second portions, which provides a bridge between the first and second portions.

An advantage of at least one embodiment of the present invention is that it enables triblock polymers to be subjected to extended mixing times with reduced degradation.

Another advantage of at least one embodiment of the present invention is that it enables items, such as gaskets, to be recycled more efficiently.

Another advantage is that it enables high levels of scrap to be recycled more efficiently.

### BRIEF DESCRIPTION OF THE DRAWINGS

FIGURE 1 illustrates a reaction scheme for polybutadiene with free radicals formed by homolytic cleavage of a styrenebutadiene-styrene copolymer (SBS) in accordance with the present invention;

FIGURE 2 is a graph showing the change in weight average molecular weight of an SEPS triblock with mixing time, both with and without polybutadiene;

FIGURE 3 is a graph showing the apparent polymer:oil ratio with mixing time; and

FIGURE 4 is a graph showing the change in compression set of an SEPS triblock with mixing time, both with and without polybutadiene.

### DETAILED DESCRIPTION OF THE PREFERRED EMBODIMENT

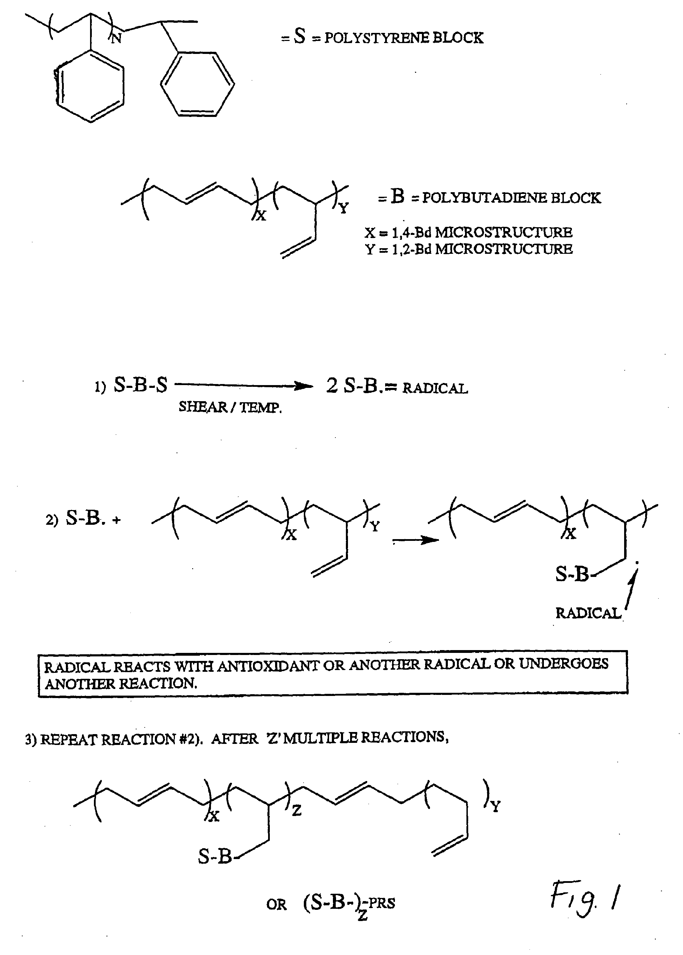

Triblock polymers comprising thermoplastic polymer end blocks and an elastomeric polymer midblock, such as SBS, SEPS, and SEBS, tend to degrade under high shear by homolytic cleavage, typically forming two diblock radicals, each having a thermoplastic block and an elastomeric block. By combining the triblock with a polymer having multiple reactive sites (hereinafter referred to as a "PRS"), such as polybutadiene, free radicals generated via homolytic cleavage of the triblock during a mixing step are reformed into a copolymer. The reformed copolymer has the character of the original triblock polymer, in which the PRS acts as a bridge between two or more diblock portions. This reaction is illustrated schematically for an SBS triblock and polybutadiene in FIGURE 1. Triblock is used herein to describe a polymer which has three (3) or more blocks. Thus, the invention is applicable to multiblock polymers and triblock as used herein includes such multiblock polymers.

Specifically, during certain operations, such as heating and/or mixing, the triblock polymer tends to degrade, generally by a break somewhere in the elastomeric polymer midblock. This degradation is observed, for example, during compounding, which often takes place in what is known as a "high shear" mixer. The resulting degradation can be observed by a change in molecular weight of the triblock. For example, the weight average molecular weight (M_{w}) of a SEPS triblock formulation may drop by about half during about 30-40 minutes mixing in a high shear mixer, as the triblock is broken down into smaller molecules.

By adding a PRS polymer having at least two, and preferably multiple reactive sites, to which two or more of the diblock fragments attach, the triblock structure can be regained. It will be appreciated that when more than two diblock fragments attach to a PRS, a star or radial polymer forms, which for purposes of discussion, will also be referred to herein as a triblock polymer. Star polymers have similar properties to a linear triblock, even though the molecular weight is generally much higher. Stated in other terms, at the point that the two diblocks are bridged, the resulting polymer may include one or more non-linear portions, which may also be known as one or more branched portions. It is preferred that the non-linear portion is derived from the PRS polymer.

The triblock may be described as having an A-B-A' structure where A and A' are each a thermoplastic polymer endblock, which generally contains a styrenic moiety, such as a poly (vinyl arene), and where B is an elastomeric polymer midblock, generally an aliphatic hydrocarbon, such as a conjugated diene or a lower alkene polymer. Block copolymers of the A-B-A' type can have different or the same thermoplastic block polymers for the A and A' blocks, and the present block copolymers are intended to embrace linear, branched and radial block copolymers. In this regard, the radial block copolymers may be designated (A-B)m -X, wherein X includes a polyfunctional atom or molecule and in which each -(A-B)ₘ -radiates from X in such a way that A is an endblock. In the radial block copolymer, X is a polyfunctional moiety and m is an integer having the same value as the functional group originally present in X. It is usually at least 3, and is frequently 4 or 5, but not limited thereto. Thus, in the present invention, the expression "block copolymer," and particularly "A-B-A' " copolymer, is intended to embrace all block copolymers having such rubbery blocks and thermoplastic blocks as discussed above, which can be extruded or molded and without limitation as to the number of blocks.

Suitable vinyl aromatic monomers for forming the poly (vinyl arene) are of the formula:

Ar-C(R)5CH₂

wherein R is hydrogen or alkyl, Ar is phenyl, halophenyl, alkylphenyl, alkylhalophenyl, naphthyl, pyridinyl, or anthracenyl, and wherein any alkyl group preferably contains 1 to 6 carbon atoms which may be mono- or multi-substituted with functional groups such as halo, nitro, amino, hydroxy, cyano, carbonyl and carboxyl. More preferably, Ar is phenyl or alkyl phenyl with phenyl being most preferred. Typical vinyl aromatic monomers include styrene, alphamethylstyrene, *p*-methyl styrene, *p*-tert-butyl styrene, and 1,3,dimethyl styrene, all isomers of vinyl toluene, especially *p*-vinyltoluene, all isomers of ethyl styrene, propyl styrene, butyl styrene, vinyl biphenyl, vinyl naphthalene, vinyl anthracene and the like, and mixtures thereof. Styrene is the most preferred. For example, A and A' may be derived from randomly copolymerized styrene and α-methyl styrene, although both A and A' blocks are generally homopolymer blocks. A and A' may be derived from the same or different monomer(s). The A-B-A' copolymer preferably has a styrene content of 15-90% by weight, more preferably, about-15-50% styrene by weight, most preferably, about 25-40% styrene by weight.

Suitable monomers for forming the polymeric elastomeric block include dienes, preferably conjugated dienes containing from 4 to 20 carbon atoms. Exemplary monomers include 1,3-butadiene, 2-methyl-1,3-butadiene (isoprene), 2,3-dimethyl-1,3-butadiene, 1,3-pentadiene, 1,3-hexadiene, and mixtures thereof. For example, B may be derived from randomly copolymerized butadiene and isoprene, or one or more blocks of each of butadiene and isoprene, although it is generally the case that the B blocks in the triblock polymer are homopolymer blocks.

In one certain embodiment of the invention, the elastomeric portion of the triblock is at least partially hydrogenated. Hydrogenation of the triblock results in conversion of all or a portion of the diene to the respective alkenes: ethylene-propylene in the case of polyisoprene, and ethylene-butylene in the case of butadiene. However, the invention is not limited to triblock polymers having an at least partially hydrogenated elastomeric portion. In another certain embodiment of the invention, the elastomeric portion is substantially non-hydrogenated.

Suitable hydrogenated polymeric elastomeric blocks include interpolymers of ethylene with a C₃-C₂₀-olefin, such as propylene, butylene, isobutylene, 1-hexene, 4-methyl-1-pentene, 1-heptene, 1-octene, 1-nonene, 1-decene, combinations thereof, and the like. Other suitable polymeric elastomeric blocks include interpolymers of ethylene with one or more of styrene, halo- or alkyl-substituted styrenes, tetrafluoroethylene, vinylbenzocyclobutane, 1,4-hexadiene, 1,7-octadiene, and cycloalkenes, e.g., cyclopentene, cyclohexene, and cyclooctene.

Exemplary triblock polymers include a polystyrene-poly(ethylene/propylene)-polystyrene ("SEPS") copolymer and a polystyrene-poly(ethylene/butylene)-polystyrene ("SEBS") copolymer, having an M_{w} of about 20,000-500,000. Each of the styrene endblocks preferably has an Mw of about 5000 to about 250,000, more preferably, about, 7,000-30,000. The midblock preferably has an M_{w} of about 5000 to about 250,000. The weight percent of styrene is preferably 15-90%, more preferably, about 25-40%, and the weight percent of ethylene/propylene is preferably 85-10%, more preferably, about 60-75%. For example, one styrene-poly(ethylene-propylene)-styrene elastomeric block copolymer (SEPS) useful in the present invention has a M_{w} of about 250,000 with two polystyrene endblocks each having an average molecular weight of about 35,000 and an ethylene-propylene midblock having an average molecular weight of about 180,000.

Commercial examples of (polystyrene/poly(ethylene-butylene)/polystyrene) block copolymers include, for example, those known as KRATON® materials, which are available from Shell Chemical Company of Houston, Tex. KRATON® block copolymers are available in several different formulations, a number of which are identified in U.S. Pat. Nos. 4,663,220 and 5,304,599. SEPS copolymers are available from Kuraray Co., Ltd., Kurashiki, Japan.

An example of a commercially available multiblock polymer that may be used to practice the invention is Stereon 840 available from Firestone Polymers, LLC (Akron, Ohio). In one embodiment the multiblock polymer has a vinyl content of about 8-60%, preferably about 9-50%, the range of possible styrene content is the same as described above with a preference of about 25-45% styrene by weight. A preferred range of M_{w} is about 40,000-150,000, with a more preferred range of about 50,000-120,000, and an even more preferred range of about 60,000-90,000.

The polymer of reactive sites (PRS) is preferably a polymer formed from diene monomers, particularly conjugated dienes, such as C₄-C₂₀ dienes. Exemplary monomers for forming the PRS include 1,3-butadiene, 2-methyl-1,3-butadiene (isoprene), 2,3-dimethyl-1,3-butadiene, 1,3-pentadiene, 1,3-hexadiene, and mixtures thereof. Preferably, the PRS has a M_{w} which is below about 50,000, more preferably, less than about 10,000, and may be as low as about 1,000. The simplest form of the polymer would be a dimer, although it is preferred that an average of more than two monomers form the polymer. Polybutadiene is a particularly preferred PRS for use with triblocks having a polybutadiene midblock or hydrogenated polybutadiene midblock because the incorporated polybutadiene is generally indistinguishable from the elastomeric midblock of the original triblock.

The PRS has a vinyl content of from 20-100%. The PRS preferably has a high vinyl content, preferably, greater than 50% vinyl, more preferably, greater than 60%, and, most preferably, at least about 70% vinyl. One suitable polybutadiene is available under the tradename RICON 156 from Colorado Chemical, which has a number average molecular weight (Mₙ) of 2540, M_{w} of 2920, CH=CH₂ content of 65%, and CH=CH content of 35%.

It is generally desirable to add a sufficient amount of PRS to maintain the triblock substantially undegraded during mixing while not adding so much that the properties of the triblock in the formulation after mixing are unduly affected by the presence of residual PRS. The amount of PRS used is thus at least partially dependent on the mixing time, temperature, and the amount of shear imparted by the mixer. A preliminary study in which varying amounts of PRS are added and the change in molecular weight with mixing time is investigated is generally useful in determining an optimum amount of PRS for a particular process. In this way, the optimum amount of PRS to be added can be determined. For most purposes, the PRS may be added to the triblock in an amount of from 0.5-30 parts by weight (pbw) PRS to 100 pbw triblock, more preferably, from about 1-10 pbw PRS to 100 pbw triblock.

The PRS is useful in a variety of polymer processing steps where degradation of the A-B-A' triblock polymer is likely to occur. For example, PRS may be added to minimize triblock degradation in a compounding step. Compounding generally involves intimately mixing the triblock with one or more compounding additives, such as those described variously as oils, plasticizers, and extenders. Other compounding additives are well known in the art and include, for example, carbon black, melting point additives, antioxidants, and the like. During compounding, the components are generally heated to a temperature which is above the softening point of the various components without posing substantial risk of degrading the components.

The PRS is particularly effective when used in processes which require relatively lengthy mixing times using high shear or other high energy mixing. It may also be used when the triblock is to be subjected to a lengthy extrusion process. Another use for the PRS is in recycling. For example, items, such as gaskets, or the extra material from which gaskets are cut, are reheated and re-extruded. The presence of PRS in the mixture helps to limit triblock degradation in the initial compounding step. Residual PRS in the material to be recycled can also help when the material is mixed during recycling, although it may be desirable to add additional PRS for each mixing step in which triblock degradation is likely to occur.

The effects of the PRS on triblock stability can be detected by studying the molecular weight of the polymer at various stages during mixing. In the absence of the PRS, the average molecular weight of the polymeric portion of the formulation tends to decrease as triblock is converted to diblock. When PRS is present, the average molecular weight remains stable, or even increases, due to the formation of star triblock polymers. In general, these star polymers do not result in a deterioration in the desirable properties of the material, such as compression set and tan). Eventually, when the PRS has been used up, the molecular weight begins to decline, in a manner similar to that observed without the PRS.

Preferably, the M_{w} of the A-B-A' triblock is maintained by the PRS, at no less than 80%, more preferably, at least 90%, and most preferably, at least 95% of the molecular weight of the triblock prior to the start of mixing.

The effect of the PRS can also be detected by measuring a property associated primarily with the triblock but not with the resulting diblock formed by homolytic degradation. For example, compression set can be used as an indicator that the PRS is effective. Compression set increases as diblock is formed, the triblock having a lower compression set than the resulting diblock. Thus, PRS is optionally added in a sufficient amount to maintain a selected compression set. For gasket material, a desirable compression set of a SEPS formulation may be less than 60%, more preferably, about 50% or less (as measured in accordance with ASTM D395-89). Prior to mixing, the compression set may be about 40-50%. By adding the PRS in the optimum amount, it is possible to maintain the compression set at about 50%, or below, even with extended mixing of 40-50 minutes, or more.

A convenient measurement of damping is the parameter tan * (tan delta). A forced oscillation is applied to a material at frequency and the transmitted force and phase shift are measured. The phase shift angle delta is recorded. The value of tan * is proportional to the ratio of energy dissipated to energy stored. The measurement can be made by any of several commercial testing devices, and may be made by a sweep of frequencies at a fixed temperature, then repeating that sweep at several other temperatures, followed by the development of a master curve of tan * vs. frequency by curve alignment. An alternate method is to measure tan * at constant frequency (such as at 40 Hz) over a temperature range. Thus PRS is optionally added in a sufficient amount to maintain a selected tan * (by either measurement process) during mixing.

Plasticizers are generally incorporated into a triblock formulation to increase the workability, pliability, elongation, elasticity, viscoelasticity and/or flexibility of the resulting material. Plasticizers are generally hydrocarbon molecules which associate with the end or midblocks of the particular triblock. Oils serve a useful plasticizing function, as well as acting as an extender. The term "oil" is defined herein as naturally occurring hydrocarbon liquids, the carbons of which are primarily saturated with hydrogen atoms. Oils preferred for use in the formulation are natural and synthetic oils, such as mineral oils. The oil or other plasticizing agent may be added in any suitable amount such as from 1 to 1000 pbw oil to 100 pbw triblock, more preferably, from about 10-200 pbw oil/100 pbw triblock.

The compounding formulation may include one or more polyphenylene ethers, also known generically as polyphenylene oxide, to raise the glass transition temperature of the compounded mixture or provide other desirable properties. Without the presence of the PRS, melting point additives such as polyphenylene ethers generally take so long to disperse in the A-B-A' triblock that significant degradation occurs. The PRS preferably reduces degradation or eliminates degradation for the length of the mixing period needed to disperse the additive.

Suitable polyphenylene ether polymers comprise a plurality of aryloxy repeating units, preferably with at least 50 repeating units. The aromatic ring may be substituted with one or more of halo-, alkyl-, aryl-, halohydrocarbonoxy-, hydrocarbonoxy-, and the like. Also included are polyphenylene ether polymers containing moieties prepared by grafting onto the polyphenylene ether such materials as vinyl monomers or polymers such as polystyrenes and elastomers. Coupled polyphenylene ether polymers in which coupling agents such as low molecular weight polycarbonates, quinines, or heterocyclics undergo reaction with the hydroxy groups of two phenyl ether chains to produce a high molecular weight polymer are also contemplated.

The polyphenylene ether polymers used in the compositions of this invention may also have various end groups, such as amino alkyl containing end groups and 4-hydroxy biphenyl end groups, typically incorporated during synthesis by the oxidative coupling reaction. The polyphenylene ether polymers may be functionalized or "capped" with end groups which add further reactivity to the polymer and in some instances provide additional compatibility with other polymer systems which may be used in conjunction with the polyphenylene ether polymers to produce an alloy or blend. For instance, the polyphenylene ether polymer may be functionalized with an epoxy end group, a phosphate end group or ortho ester end group by reacting a functionalizing agent, such as 2-chloro-4(2-diethylphosphatoepoxy)6-(2,4,6-trimethyl-phenoxy)-1,3,5-triazene, with one of the end groups of the polyphenylene ether polymer, *i.e.,* one of the terminal hydroxyl groups.

Specific polyphenylene ether polymers useful in the present invention include but are not limited to poly(2,6-dimethyl-1,4-phenylene ether); poly(2,3,6-trimethyl-1,4-phenylene)ether; poly(2,6-diethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene)ether; poly(2,6-dilauryl-1,4-phenylene)ether; poly(2,6-diphenyl-1,4-phenylene) ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene) ether; poly(2-methyl-6-phenyl-1,4-phenylene)ether; poly(2-ethoxy-1,4-phenylene)ether; poly(2-chloro-1,4-phenylene)ether; poly(2,6-dibromo-1,4-phenylene)ether; poly(3-bromo-2,6-dimethyl-1,4-phenylene)ether; mixtures thereof, and the like.

Suitable copolymers include random copolymers containing 2,6-dimethyl-1,4-phenylene ether units and 2,3,6-trimethyl-1,4-phenylene ether units.

Generally, the polyphenylene ethers have an Mₙ within the range of about 3,000 to 40,000 and an M_{w} in the range of 20,000 to 80,000, as determined by gel permeation chromatography. The polyphenylene ether may be added in the amount of about 1 to 1000 pbw polyphenylene ether to 100 pbw triblock, more preferably, about 30-100 pbw polyphenylene ether to 100 pbw triblock.

The compounding formulation may also include one or more antioxidants. Antioxidants commonly employed include hindered phenols, such as (chemical name: 3,5-bis(1,1-dimethylethyl)-4-hydroxybenzenepropanoic acid, 2,2-bis[[3-[3,5-bis(dimethylethyl)-4-hydroxyphenyl]-1-oxopropoxy] methyl]1,3-propanediyl ester, also known as tetrakis[methylene(3,5-di-tert-butyl-4-hydroxyhydrocinnimate)] methane, which is sold under the trade name IRGANOX® 1010 by Ciba-Geigy Corp. of Tarrytown, N.Y., and phosphonites and phosphites, such as 168Tris(2,4-di-tert-butylphenyl)phosphite, sold by Ciba Geigy under the trade name IRGAFOS®, either alone, or in combination with other antioxidants.

Preferably, the compounding formulation includes up to about three weight percent antioxidant, based on the weight of the triblock component.

Other compounding additives include, but are not limited to natural or synthetic resins, such as rubbers, polyolefins, poly(vinyl-arene)s, such as polystyrene, ethylene-vinyl acetate copolymers, ethylene-carboxylic acid copolymers, ethylene acrylate copolymers, nylons, polycarbonates, polyesters, polypropylene, ethylene-propylene interpolymers such as ethylene-propylene rubber, EPDM, chlorinated polyethylene, thermoplastic vulcanates, polyurethanes, as well as graft-modified olefin polymers, and combinations thereof.

For example, a typical compounding step includes combining 100 parts by weight (pbw) of a triblock polymer, such as SEBS or SEPS, with 0.5 to 10 pbw of a PRS, 1 to 1000 pbw polyphenylene ether and 1-1000 pbw of an oil or other extender, and optionally one or more other compounding agents, such as those described above. The components of the mixture may be added together or individually to a mixer and blended until intimately mixed. The mixture is then extruded from the mixer and formed into pellets or other items suitable for subsequent processing steps, such as molding or extrusion processes to form an article.

For any given mixing process, the amount of degradation of the A-B-A' triblock tends to increase as the mixing time increases. Thus, when PRS is added to the A-B-A' triblock, it gradually becomes used up over time. Accordingly, the longer the mixing time, the greater the amount of PRS which will be needed to reform the radicals into triblock polymer. The PRS is preferably added to the A-B-A' triblock prior to mixing, in sufficient amount to inhibit degradation over the desired mixing time.

Alternatively, part of the PRS may be added prior to or at the start of mixing, with additional PRS being added as the original PRS becomes used up. In yet another embodiment, the PRS is added during, or towards the end of the mixing period to reform the radicals into triblock polymer. This latter approach may be less effective where there is an antioxidant in the mixture, which converts the radicals into unreactive diblock polymers.

The PRS is effective with a variety of blending processes, including roll milling, screw extrusion, and the like. A preferred blending technique is twin-screw extrusion with a high level of shear induced mixing.

The triblock A-B-A' polymers may be prepared using free-radical, cationic or anionic initiators or polymerization catalysts. Such polymers may be prepared using bulk, solution, or emulsion techniques. In general, when solution anionic techniques are used, conjugated diolefin polymers and copolymers of conjugated diolefins and alkenyl aromatic hydrocarbons are prepared by contacting the monomer or monomers to be polymerized simultaneously or sequentially with an organo-alkali metal compound in a suitable solvent at a temperature within the range from about -150°C to about 300°C, preferably at a temperature within the range from about 0°C to about 100°C. Particularly effective anionic polymerization initiators are organolithium compounds having the general formula: RLiₙ
wherein: R is an aliphatic, cycloaliphatic, aromatic or alkyl-substituted aromatic hydrocarbon radical having from 1 to about 20 carbon atoms; and n is an integer of 1 to 4.

In addition to sequential techniques to obtain triblocks and higher orders of repeating structures, at least anionic initiators can be used to prepare diblocks of styrene-polydiene having a reactive ("live") chain end on the diene block which can be reacted through a coupling agent to create, for example, (S-I)ₓY or (S-B)ₓY structures wherein x is an integer from 2 to about 30, Y is a coupling agent, I is isoprene, B is butadiene and greater than 65% of S-I or S-B diblocks are chemically attached to the coupling agent. Y usually has a molecular weight which is low compared to the polymers being prepared and can be any of a number of materials known in the art, including halogenated organic compounds; halogenated alkyl silanes; alkoxy silanes; various esters such as alkyl and aryl benzoates, difunctional aliphatic esters such as dialkyl adipates and the like; polyfunctional agents such as divinyl benzene (DVB) and low molecular weight polymers of DVB. Depending on the selected coupling agent the final polymer can be a linear triblock polymer (x=2), i.e., S. I.Y.I.S; or branched, radial or star configurations. The coupling agent, being of low molecular weight, does not materially affect the properties of the final polymer. DVB oligomer is commonly used to create star polymers, wherein the number of diene arms can be 7 to 20 or even higher. Hydrogenation of the coupled structures discussed above gives (S-EP)ₓY or (S-EB)ₓY final compositions, where EP is poly(ethylene-propylene), EB is poly(ethylene-butylene), x is the number of arms and Y is the coupling agent. Since the number of (S-EP) [or (S-EB)] arms in a star polymer can be large, the molecular weights of star polymers within the invention can be much larger than those of linear, branched or radial styrene-ethylene/propylene polymers, *i*.*e*., up to 500,000 or higher. Such higher molecular weight polymers have the viscosity of lower molecular weight linear polymers and thus are processable in spite of the high molecular weight. Such elastomeric branched or radial (star) polymers may have the formula:

[Sₘ-(EP)_{w}]ₓ-Y or [Sₘ-(EB)_{w}]ₓ-Y,

wherein S is a polystyrene block, EP denotes a poly(ethylene-propylene) block, EB denotes a poly(ethylene-butene) block, m is an integer from about 38 to about 337, w is an integer from about 250 to about 930, x is an integer from about 2 to about 30 and Y is a coupling agent. Mixtures of the above may also be used.

In general, the hydrogenation or selective hydrogenation of the triblock polymer may be accomplished using any of the several hydrogenation processes known in the prior art. For example the hydrogenation may be accomplished using methods such as those taught, for example, in U.S. Patent Nos. 3,494,942; 3,634,594; 3,670,054; 3,700,633 and Re. 27,145. The known methods for hydrogenating polymers containing ethylenic unsaturation and for hydrogenating or selectively hydrogenating polymers containing aromatic and ethylenic unsaturation, involve the use of a suitable catalyst, such as a catalyst or catalyst precursor comprising an iron group metal atom, particularly nickel or cobalt, and a suitable reducing agent, such as an aluminum alkyl. In general, the hydrogenation is accomplished in a suitable solvent at a temperature within the range from about 20°C to about 80°C and at a hydrogen partial pressure within the range from about 7 kg/cm² to about 350 kg/cm². Catalyst concentrations within the range from about 50 ppm (wt) to about 500 ppm (wt) of iron group metal based on total solution are generally used and contacting at hydrogenation conditions is generally continued for a period of time within the range from about 60 to about 240 minutes. After the hydrogenation is completed, the hydrogenation catalyst and catalyst residue is generally separated from the polymer.

Without intending to limit the scope of the present invention, the following examples demonstrate the effectiveness of polybutadiene in preventing shear degradation of SEPS and SEBS polymers.

### EXAMPLES

### EXAMPLE 1: Effect of Mixing on the Molecular Weight of SEPS With and Without Polybutadiene

SEPS 54077, from Kuraray Co., Ltd., Kurashiki, Japan, was combined with a mineral oil (PW-380 from Idemitsu Kosan Co., Ltd.) in a ratio of 50 pbw SEPS to 50 pbw mineral oil (Formulation 1). The combination of mineral oil and SEPS was mixed in a 50g Brabender mixer at 90rpm and a temperature of 250°C. Samples were taken at 15 minute intervals and the M_{w} determined.

Second and third formulations (Formulation 2 and 3) were prepared using the same mixture of SEPS and mineral oil as for Formulation 1, but with 4 and 20 parts per hundred parts reactants, respectively, of RICON 156, a low molecular weight 70% vinyl polybutadiene, and the experiment repeated.

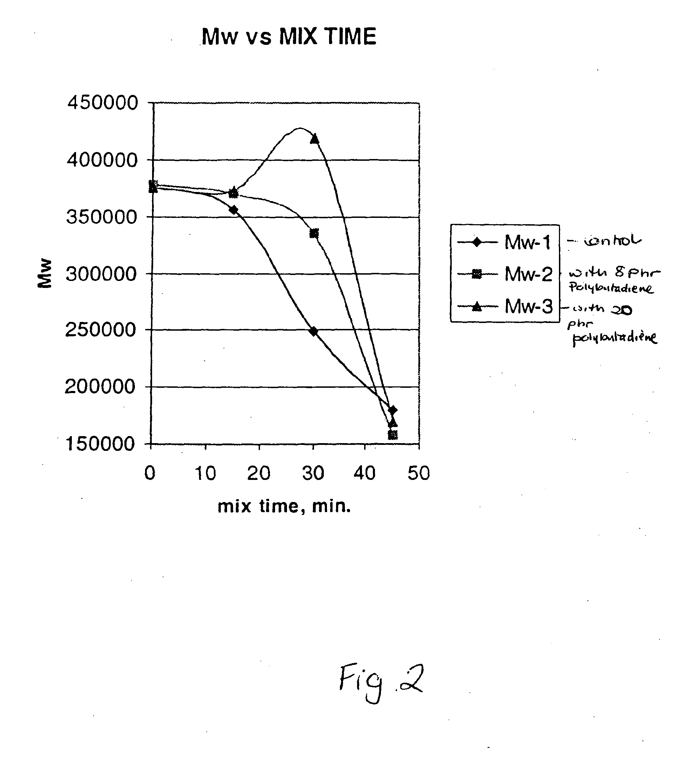

FIGURE 2 shows the changes in molecular weight for the three formulations. As can be seen, the molecular weight of the oil/SEPS mixture (Formulation 1) began to decrease noticeably after 15 minutes mixing, dropping to less than half of the original value after 45 minutes mixing. Formulation 2, containing 8 phr polybutadiene, showed relatively good retention in triblock molecular weight for the first thirty minutes of mixing. The molecular weight then dropped, which may have been due to the polybutadiene having been used up. Formulation 3 (25 phr RICON 156) showed an initial increase in molecular weight, thought to be due to the formation of [SEP]ₓ star polymers. Subsequently, it also exhibited a drop in molecular weight, but at a somewhat later time than with the 8phr.

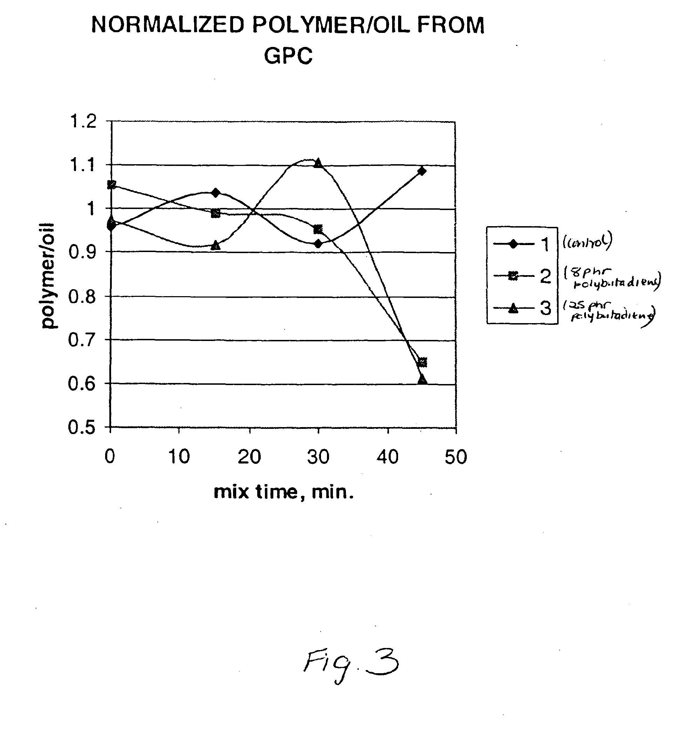

Plots of normalized polymer/oil ratio from the GPC data obtained (FIGURE 3) show that the control (Formulation 1) showed a fairly consistent ratio over time (to within experimental errors of measurement). Formulations 2 and 3 showed a significant drop in polymer to oil ratio at the 45 minute analysis. Since the polymer: oil ratio is not actually changing significantly, this suggests that not all the polymer is passing through the GPC- the larger [SEP]ₓ star polymers being too large to pass through the column. This phenomenon may have contributed to some of the apparent loss in molecular weight of Formulations 2 and 3 in FIGURE 2.

### EXAMPLE 2: Effect of Polybutadiene on the Properties of SEPS/ polypropylene oxide/oil Formulations

Three formulations (Formulations 4, 5, and 6) were prepared using SEPS (as for Example 1), P1D50 (an oligomeric oil, obtained from Chevron), and X0101 (a mixture of 70% polyphenylene oxide and 30% polystyrene, obtained from Asahi Chemical), with (Formulations 5 and 6) and without (Formulation 4) RICON 156 (polybutadiene). The SEPS and X0101 were used in a ratio of 1:1.

The formulations were mixed for 30 minutes at 250°C in a Brabender mixer at 90rpm. After mixing, samples were extruded, cooled and tested. The following tests were performed:
ASKER C : SR15 0101 Standard
SHORE A Hardness: ASTM Standard D-2240
Compression Set at 130°C (%): ASTM Standard D-395-89
Tensile Strength (psi)/Elongation at break (%): test sheets are molded to 0.040 inch thickness. Rings are die-cut: 1.40 inch diameter X 0.075 inch wide. Rings are pulled at 25°C at 50 inches/minute.
Tan * (40Hz, 3% strain) Hysteresis Test Method: The hysteresis loss was measured with a Dynastat Viscoelastic Analyzer. Test specimen geometry was taken in the form of a strip of a length of 30mm and a width of 15mm. A temperature sweep from -40°C to +100°C at a frequency of 40Hz at 3% strain was employed. The data at 20°C is reported.

TABLE 1 shows the results obtained. As can be seen, compression set was improved (i.e., lowered) by the addition of polybutadiene. The 3.1% polybutadiene formulation (Formulation 5) worked well for the mixing time used.

**TABLE 1**

| **Formulation** | **4** | **5** | **6** |
|---|---|---|---|
| RICON 156 (%) | 0 | 3.1 | 5.2 |
| P1D50 (%) | 63.8 | 61.9 | 59.8 |
| SEPS | 18.1 | 17.5 | 17.5 |
| X0101 | 18.1 | 17.5 | 17.5 |

| **Results** | | | |
|---|---|---|---|
| ASKER C | 14.5 | 10 | 7 |
| SHORE A | 2 | 1 | |
| 130°C Compression Set (%) | 71% | 51% | 57% |
| Tensile Strength (psi)/E_{b} (%) | 242/1007 | 1771/1063 | 321/1357 |
| Tan * (40Hz, 3% strain) 20°C | 0.062 | 0.044 | 0.061 |

### EXAMPLE 3: Effect of Polybutadiene on the Compression Set of SEPS/polyphenylene oxide/oil Formulations Over Time

Formulations were prepared using SEPS, X0101, and PW380 mineral oil in the ratio SEPS/X0101/PW380 of 20/20/60. Comparative formulation 7 included no RICON 156 polybutadiene. Comparative formulation 8 included 3% RICON 156 polybutadiene. The formulations were mixed in a Brabender mixer at 250°C and 90 rpm. Samples were withdrawn at 15 minute intervals and % compression set measured (130°C, method as described above for Example 2).

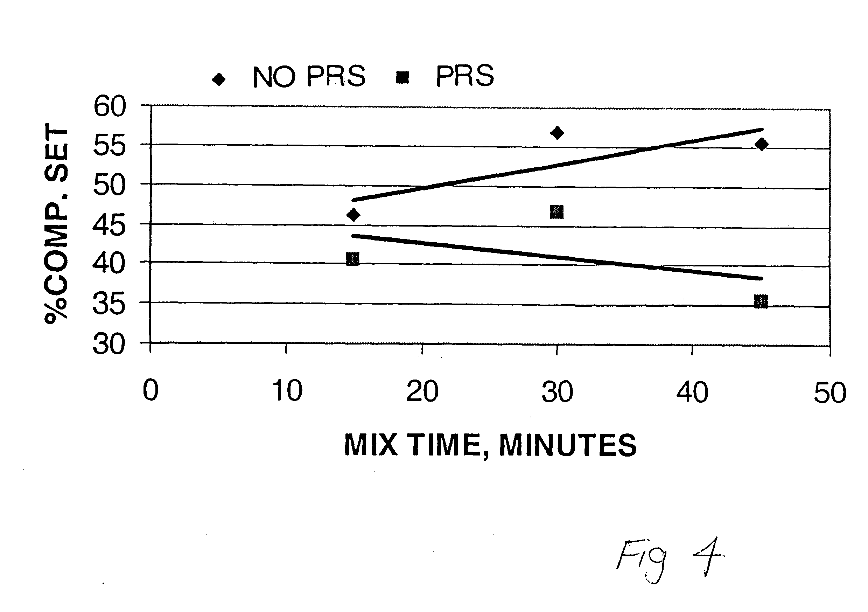

FIGURE 4 shows the results obtained. Without polybutadiene, the compression set increased. With polybutadiene at 3%, compression set decreased after 45 minutes mixing. Compression is lower in each case where RICON 156 is used.

The invention has been described with reference to the preferred embodiment. Obviously, modifications and alterations will occur to others upon reading and understanding the preceding detailed description. It is intended that the invention be construed as including all such modifications and alterations insofar as they come within the scope of the appended claims or the equivalents thereof.

## Claims

1. A method of reducing degradation of a triblock polymer into diblock polymers, the method comprising:
combining the triblock polymer with a polymer which provides a first reactive site and at least a second reactive site; and
subjecting the triblock to a process which tends to produce the degradation, wherein a first of the diblock polymers bonds to the first reactive site and a second of the diblock polymers bonds to the second reactive site, such that the polymer acts as a bridge between the first and second diblock polymers.

2. The method of claim 1, wherein said triblock polymer comprises an A-B-A' triblock copolymer wherein A and A' are the same or different thermoplastic polymers, and wherein B is an elastomeric polymer.

3. The method of claim 1, wherein the triblock polymer includes an endblock which is derived primarily from a vinyl aromatic monomer.

4. The method of claim 3, wherein the vinyl aromatic monomer is selected from the group consisting of styrene, alpha-methylstyrene, *p*-methyl styrene, *p*-tert-butyl styrene, and 1,3,dimethyl styrene, all isomers of vinyl toluene, especially *p*-vinyltoluene, all isomers of ethyl styrene, propyl styrene, butyl styrene, vinyl biphenyl, vinyl naphthalene, vinyl anthracene, and mixtures thereof.

5. The method of claim 1, wherein the triblock polymer includes a midblock derived primarily from a conjugated diene monomer.

6. The method of claim 5, wherein the conjugated diene monomer is selected from the group consisting of 1,3-butadiene, 2-methyl-1,3-butadiene (isoprene), 2,3-dimethyl-1,3-butadiene, 1,3-pentadiene, 1,3-hexadiene, and mixtures thereof.

7. The method of claim 5, wherein the midblock is at least partially hydrogenated.

8. The method of claim 1, wherein the triblock is selected from the group consisting of SEBS, SEPS, and combinations thereof.

9. The method of claim 1, wherein the polymer which provides the first and second reactive sites is derived from a conjugated diene monomer.

10. The method of claim 1, wherein the polymer which provides the first and second reactive sites comprises a polymer derived from a monomer from the group consisting of 1,3-butadiene, 2-methyl-1,3-butadiene (isoprene), 2,3-dimethyl-1,3-butadiene, 1,3-pentadiene, 1,3-hexadiene, and mixtures thereof.

11. The method of claim 1, wherein the polymer which provides the first and second reactive sites comprises polybutadiene.

12. The method of claim 1, wherein the polymer which provides the first and second reactive sites has a weight average molecular weight which is below about 50,000.

13. The method of claim 12, wherein the polymer which provides the first and second reactive sites has a weight average molecular weight which is below about 10,000.

14. The method of claim 1, wherein the polymer which provides the first and second reactive sites has a vinyl content of greater than about 50%.

15. The method of claim 1, wherein the step of combining the triblock polymer with a polymer which provides a first reactive site and at least a second reactive site is carried out prior to the step of subjecting the triblock to the process which tends to produce the degradation.

16. The method of claim 1, wherein the step of subjecting the triblock to the process which tends to produce the degradation includes mixing the triblock with at least one of a plasticizer and a polyphenylene ether.

17. The method of claim 16, wherein the step of subjecting the triblock to the process which tends to produce the degradation includes mixing the triblock with a polyphenylene ether selected from the group consisting of poly(2,6-dimethyl-1,4-phenylene ether); poly(2,3,6-trimethyl-1,4-phenylene)ether; poly(2,6-diethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene)ether; poly(2,6-dilauryl-1,4-phenylene)ether; poly(2,6-diphenyl-1,4-phenylene) ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene) ether; poly(2-methyl-6-phenyl-1,4-phenylene)ether; poly(2-ethoxy-1,4-phenylene)ether; poly(2-chloro-1,4-phenylene)ether; poly(2,6-dibromo-1,4-phenylene)ether; poly(3-bromo-2,6-dimethyl-1,4-phenylene)ether; polyphenylene ethers having an aromatic ring which is substituted with at least one of halo-, alkyl-, aryl-, halohydrocarbonoxy-, hydrocarbonoxy-; and mixtures thereof.

18. A method of repairing homolytic cleavage of a first copolymer having a first thermoplastic endblock, a second thermoplastic endblock, and an elastomeric midblock intermediate the first and second endblocks, the method comprising:
subjecting the first copolymer to a process which causes the homolytic cleavage of the first copolymer into smaller copolymers having an thermoplastic endblock and an elastomeric endblock;
reacting at least a first and a second of the smaller copolymers with a polymer having at least first and second reactive sites capable of reacting with the smaller copolymers to form a copolymer having a first thermoplastic endblock, a second thermoplastic endblock, and an elastomeric midblock intermediate the first and second endblocks.

19. The method of claim 18, wherein the polymer having at least first and second reactive sites is derived primarily from a diene monomer from which the elastomeric midblock of the first copolymer is also derived.

20. A method of compounding a copolymer which tends to undergo cleavage into smaller polymers, comprising:
mixing the copolymer with a polyphenylene ether to form a mixture, the step of mixing resulting in at least a portion of the copolymer being cleaved into at least two smaller polymers; and
reacting at least two of the smaller polymers with a polymer having at least first and second reactive sites, whereby the compression set of a solid formed from the mixture is lower than in the absence of the polymer having the first and second reactive sites.

21. A block copolymer having at least three blocks comprising:
a first thermoplastic polymer block;
a second thermoplastic polymer block;
at least one elastomeric polymer block intermediate the first and second thermoplastic polymer blocks, the elastomeric block including a first elastomeric polymer portion and a second elastomeric portion, the elastomeric block further including at least one non-linear polymer portion, intermediate the first and second portions, which provides a bridge between the first and second portions.
